# EUROPÄISCHE PATENTSCHRIFT

(11) **EP 0 671 435 B1**
(45) Veröffentlichungstag und Bekanntmachung des Hinweises auf die Patenterteilung: **07.04.1999**
(21) Anmeldenummer: 95100170.0
(22) Anmeldetag: 07.01.1995
(51) Int. Cl.: C08L 33/06, C08J 3/03, C04B 24/26, C09D 133/06

(54) **Durch Sprühtröcknung enthaltene redispergierbare Bindemittelpulver**
Redispersable binder powders obtained by spray drying
Liants poudreux redispersables obtenus par séchage par pulvérisation

(30) Priorität: 09.03.1994 DE 4407841
(43) Veröffentlichungstag der Anmeldung: 13.09.1995
(73) Patentinhaber: POLYMER LATEX GmbH & Co. KG, 45764 Marl (DE)
(72) Erfinder: Sauer, Thomas, Dr., D-45721 Haltern (DE)

(56) Entgegenhaltungen:
- EP-A- 0 467 103
- EP-A- 0 629 650

## Beschreibung

Die vorliegende Erfindung betrifft aus wäßrigen, schutzkolloidstabilisierten Acrylatdispersionen hergestellte pulverförmige, redispergierbare Bindemittel, die geeignet sind zur Herstellung von Anstrichs- und Beschichtungsmassen in Form von pulverförmigen Trockenmischungen und sich durch einfaches Einrühren in Wasser in eine gebrauchsfähige Form überführen lassen.

Der Einsatz von wäßrigen Acrylatdispersionen als Bindemittel in wasserbasierenden Anstrichfarben und Beschichtungssystemen ist seit langem bekannt. Solche Farben und Beschichtungen werden in gebrauchsfertiger, in Wasser dispergierter Form angeboten. Aufgrund der komplexen Zusammensetzung können bei der Lagerung und beim Transport solcher gebrauchsfertigen Formulierungen Probleme durch Phasentrennung, Nachdicken, Schädigung durch Frost- und Bakterieneinwirkung auftreten.

Die aufgrund des wäßrigen Dispergiermediums vorhandene Anfälligkeit gegen Bakterienbefall wird durch den Zusatz von Konservierungsmittel unterdrückt. Solche Mittel geraten jedoch im Rahmen eines zunehmenden Umweltbewußtseins unter verstärkte Kritik.

Zur Lagerung und Handhabung solcher Formulierungen in gebrauchsfertiger Form fällt eine große Zahl von Gebinden an. Da die restlose Entleerung und Endreinigung dieser Gebinde äußerst aufwendig und kostspielig ist, stellt deren Entsorgung bzw. Wiederverwendung ein zunehmendes Problem dar.

Aus wäßrigen Kunststoffdispersionen hergestellte, redispergierbare Dispersionspulver sind als Zusätze zu hydraulisch abbindenden Massen bekannt. So werden beispielsweise in EP 0 062 106 und EP 0 078 449 solche Pulver auf der Basis von Acrylatdispersionen beschrieben. In EP 0 230 220 wird ein pulvriges Beschichtungsmittel für Baustoffe beschrieben, in dem ein handelsübliches Dispersionspulver auf Basis von Vinylestern eingesetzt wird.

DE-OS 40 21 216 (EP-A-0 467 103) und EP 0 629 650 nach Art. 54(3) EPÜ beschreiben Dispersionspulver als Bindemittel für Anstrichstoffe und Kunststoffputze, die zusätzlich hydraulische Bindemittel wie Kalk und/oder Zement enthalten. Ohne den Zusatz solcher hydraulischen Bindemittel zeigen diese Dispersionspulver keine ausreichend guten Eigenschaften in Anstrich- und Beschichtungsmassen.

Spezielle pulverförmige, redispergierbare Bindemittel auf Acrylatbasis für den Einsatz in Trockenmischungen, die keine hydraulischen Bindemittel enthalten, werden daher vom Stand der Technik nur unzureichend beschrieben.

Der vorliegenden Erfindung lag daher als Aufgabe zugrunde, neue pulverförmige, redispergierbare Bindemittel und ein Verfahren zu deren Herstellung bereitzustellen, die sich insbesondere zur Herstellung pulverförmiger Anstrichs- und Beschichtungsmassen, die keine hydraulischen Bindemittel enthalten, eignen.

Die Aufgabe wird durch die erfindungsgemäßen pulverförmigen, redispergierbaren Bindemittel, erhältlich durch Sprühtrocknung von wäßrigen, schutzkolloidstabilisierten Acrylatdispersionen, wobei
I. eine wäßrige, schutzkolloidstabilisierte Acrylatdispersion mit einem Feststoffgehalt von 10 bis 65 Gew.-% in Gegenwart von 0,01 bis 30 Gew.-% - bezogen auf 100 Gew.-% I -,
II. wasserlöslicher bzw. wasserdispergierbarer Harze mit mittleren Molekulargewichten zwischen 2.000 und 100.000 g/mol, bestehend aus
   a) 50 bis 70 Gew.-% hydrophoben, im wesentlichen wasserunlöslichen Monomeren, wobei die Löslichkeit dieser Monomere in Wasser bei 25 °C weniger als 3 Gew.-% beträgt, und
   b) 50 bis 30 Gew.-% hydrophilen, wasserlöslichen und salzbildenden Monomeren, wobei die Löslichkeit dieser Monomere bzw. deren Metall- oder Ammoniumsalze in Wasser bei 25 °C mindestens 10 Gew.-% beträgt,
in einem heißen Luftstrom zu einem freifließenden und staubarmen Pulver versprüht wird, gelöst.

Ein Verfahren zur Herstellung eines pulverförmigen, redispergierbaren Bindemittels durch Sprühtrocknung von wäßrigen, schutzkolloidstabilisierten Acrylatdispersionen erfolgt dadurch, daß
I. eine wäßrige, schutzkolloidstabilisierte Acrylatdispersion mit einem Feststoffgehalt von 10 bis 65 Gew.-% in Gegenwart von 0,01 bis 30 Gew.-% - bezogen auf 100 Gew.-% I -,
II. wasserlöslicher bzw. wasserdispergierbarer Harze mit mittleren Molekulargewichten zwischen 2.000 und 100.000 g/mol, bestehend aus
   a) 50 bis 70 Gew.-% hydrophoben, im wesentlichen wasserunlöslichen Monomeren, wobei die Löslichkeit dieser Monomere in Wasser bei 25 °C weniger als 3 Gew.-% beträgt, und
   b) 50 bis 30 Gew.-% hydrophilen, wasserlöslichen und salzbildenden Monomeren, wobei die Löslichkeit dieser Monomere bzw. deren Metall- oder Ammoniumsalze in Wasser bei 25 °C mindestens 10 Gew.-% beträgt,
in einem heißen Luftstrom zu einem freifließenden und staubarmen Pulver versprüht wird. Die Sprühtrocknung erfolgt bei einer Eintrittstemperatur von 80 bis 150 °C und einer Austrittstemperatur von 40 bis 100 °C.

Prinzipiell einsetzbar sind die schutzkolloidstabilisierten Dispersionen nach EP-A-538 571 und nach EP-A-0 671 420 (Hüls-Anmeldung O.Z. 4830).

Die Acrylatdispersionen bestehen, bezogen auf die Gesamtmenge der Monomere, aus 20 bis 100 Gew.-% Alkyl(meth-)acrylaten mit 1 bis 18 Kohlenstoffatomen in der Alkylkette. Dabei kann ein einziges oder ein Gemisch von zwei oder mehreren (Meth-)Acrylaten eingesetzt werden. Bevorzugt werden Methylmethacrylat, n-Butylacrylat und/oder 2-Ethylhexylacrylat eingesetzt.

Daneben können bis zu 60 Gew.-% andere olefinisch ungesättigte Monomere oder Gemische aus solchen enthalten sein. Dazu eignen sich vinylaromatische Monomere wie Styrol, Vinylester mit 1 bis 12 Kohlenstoffatomen in der Säurekomponente, olefinisch ungesättigte Diene wie Butadien und/oder halogenierte, olefinisch ungesättigte Monomere wie Vinylchlorid. Bevorzugt wird Styrol als weiteres Monomer eingesetzt.

Weiterhin können Monomere mit funktionellen Gruppen, im weiteren Comonomere genannt, in einem Anteil von bis zu 10 Gew.-%, bevorzugt 0,1 bis 5 Gew.-%, bezogen auf die Gesamtmenge der Monomere, in den Acrylatdispersionen enthalten sein. Dazu gehören insbesondere hydroxylgruppenhaltige Monomere wie z.B. Hydroxyalkyl(meth-)acrylate, Sulfonsäure- oder Sulfonatgruppenhaltige Monomere wie Styrolsulfonat, Vinylsulfonat oder Sulfoalkyl(meth-)acrylate, methylol- und silanolgruppenhaltige Monomere, mehrfach olefinisch ungesättigte Monomere (vernetzende Monomere) und insbesondere amidgruppenhaltige Monomere wie (Meth-)Acrylamid. Diese Comonomere können einzeln oder in Gemischen eingesetzt werden.

Außerdem können die Acrylatdispersionen bis zu 10 Gew.-%, bevorzugt 0,2 bis 5 Gew.-% olefinisch ungesättigte Carbonsäuren, bezogen auf die Gesamtmenge der Monomere, enthalten. Dabei eignen sich insbesondere Acryl- und Methacrylsäure, Fumarsäure, Maleinsäure und Itakonsäure.

Die eingesetzte Menge an olefinisch ungesättigter Carbonsäure wird vor dem Einsatz mit einer nichtflüchtigen Base teilweise oder vollständig neutralisiert. Vorzugsweise werden pro Carbonsäureeinheit 0,7 bis 1,3 molare Äquivalente nichtflüchtige Base, am meisten bevorzugt 0,8 bis 1,2 Äquivalente Base zugegeben. Als Basen kommen im Sauren bis Neutralen lösliche Metallhydroxide sowie nichtflüchtige Aminverbindungen in Frage, wobei bevorzugt die Alkalihydroxide geeignet sind. Am meisten bevorzugt sind Natrium- und Kaliumhydroxid.

Zur Stabilisierung der Acrylatdispersionen werden natürlich vorkomnende und synthetisch hergestellte, wasserlösliche Polymere, sogenannte Schutzkolloide, eingesetzt. Dazu eignen sich beispielsweise Derivate der Cellulose wie Hydroxyethylcellulose, Hydroxypropylcellulose und Carboxymethylcellulose, wasserlösliche und wasserquellbare Stärken und Dextrine, Polyvinylalkohole, Polyethylenglykole, Polyvinylpyrrolidon, Polyethylen-Polypropylen-diblock- und Triblockcopolymere sowie natürlich vorkommende Proteine wie Casein. Diese Schutzkolloide können allein oder in Kombination zu mehreren eingesetzt werden. Der Gehalt an Schutzkolloid beträgt 0,01 bis 30 Gew.-% bezogen auf die Gesamtmenge an Monomeren in der Acrylatdispersion, vorzugsweise 0,05 bis 5 Gew.-%.

Neben den Schutzkolloiden können nach Bedarf auch zusätzliche Emulgatoren eingesetzt werden. Dazu eignen sich die handelsüblichen anionischen und/oder nichtionischen Emulgatoren. Bevorzugt werden die erfindungsgemäßen Polymerdispersionen jedoch mit weniger als 0,1 Gew.-% solcher Emulgatoren hergestellt, bezogen auf die Gesamtmenge der Monomeren in der Acrylatdispersion.

Die Acrylatdispersionen werden durch Emulsionspolymerisation in Wasser als kontinuierlicher Phase durchgeführt. Die Reaktionstemperatur während der Reaktion beträgt 40 bis 90 °C, vorzugsweise 60 bis 85 °C. Die polymeren Schutzkolloide und die optional eingesetzten Emulgatoren werden vorzugsweise in die Vorlage gegeben, können aber auch ganz oder teilweise im Zulaufverfahren kontinuierlich oder diskontinuierlich zugegeben werden.

Die Monomere können ganz oder teilweise vorgelegt werden oder ganz oder teilweise semikontinuierlich oder diskontinuierlich zudosiert werden. Bevorzugt ist ein semikontinuierliches Monomerzulaufverfahren. Die Comonomere und olefinisch ungesättigten Carbonsäuren können zusammen mit der zur Neutralisation eingesetzten Base teilweise oder ganz vorgelegt oder zudosiert werden. Bevorzugt ist ein Verfahren, bei dem die olefinisch ungesättigte Carbonsäure zusammen mit der zur Neutralisation eingesetzten Base in die Vorlage gegeben wird. Diese Verfahrensweise führt insbesondere zu sehr gut stabilisierten, äußerst koagulatarmen Dispersionen.

Zur Polymerisation werden radikalbildende, wasser- oder öllösliche Initiatoren eingesetzt. Dazu eignen sich Azoinitiatoren, Peroxide, Hydroperoxide und Peroxodisulfate in einer Menge von 0,05 bis 3 Gew.-% bezogen auf die Gesamtmenge der eingesetzten Monomere der Acrylatdispersion. Zusätzlich können 0,05 bis 3 Gew.-% eines Reduktionsmittels eingesetzt werden. Geeignet sind beispielsweise Natriumbisulfit, Ascorbinsäure und Natriumformaldehydsulfoxylat. In einer bevorzugten Ausführungsform werden 0,2 bis 2 Gew.-% eines Peroxids oder Hydroperoxids in die Vorlage gegeben und 0,2 bis 2 Gew.-% einer wässrigen Lösung eines Reduktionsmittels semikontinuierlich zudosiert.

Weiterhin können zur Regelung des Molekulargewichts des Polymerisats und der Latexviskosität öl- und wasserlösliche Regler zugesetzt werden. Als öllösliche Regler eignen sich bevorzugt Alkylmercaptane. Als wasserlösliche Regler eignen sich unter anderen Thioethanol, Thioglykolsäure und Triethanolamin. Die Regler werden allein oder im Gemisch in einem Gehalt von 0,05 bis 2 Gew.-% bezogen auf die Gesamtmenge der eingesetzten Monomere der Acrylatdispersion zugesetzt. Die Regler können in die Vorlage gegeben oder im Gemisch mit anderen Stoffströmen oder separat zudosiert werden.

Die wäßrigen Acrylatdispersionen haben einen Feststoffgehalt von 10 bis 65 Gew.-% und bevorzugt von 40 bis 60 Gew.-%. Die Dispersionen zeigen am Ende der Polymerisation einen hohen Endumsatz und haben einen sehr geringen Anteil von nicht umgesetztem Monomer. Die Acrylatdispersionen sind frei von grobteiligen Abscheidungen und feinteiligem Koagulat.

Bevorzugt werden solche Dispersionen mit niedriger minimaler Filmbildungstemperatur (einer Mindest film bildungs temperatur MFT) eingesetzt. Die MFT liegt vorzugsweise zwischen -30 und 40 °C und besonders bevorzugt zwischen -20 und 20 °C. Solche Filmbildungstemperaturen können durch geeignete Kombination der Monomere im Polymerisat eingestellt werden.

Die erfindungsgemäßen pulverförmigen, redispergierbaren Bindemittel werden durch Sprühtrocknung dieser wäßrigen, schutzkolloidstabilisierten Acrylatdispersionen unter Zusatz wasserlöslicher bzw. wasserdispergierbarer Harze, mineralischer und sonstiger Hilfsstoffe erhalten.

Die wasserlöslichen bzw. wasserdispergierbaren Harze sind Copolymere, die aus mindestens einem hydrophoben, im wesentlichen wasserunlöslichen Monomer (Comonomere) bestehen. Im wesentlichen wasserunlöslich bedeutet dabei, daß die Löslichkeit dieser Monomere in Wasser bei 25 °C weniger als 3 Gew.-% beträgt. Desweiteren bestehen diese Copolymere aus mindestens einem hydrophilen, wasserlöslichen und salzbildenden Monomer. Wasserlöslich bedeutet dabei, daß die Löslichkeit dieser Monomere bzw. deren Metall- oder Ammoniumsalze in Wasser bei 25 °C mindestens 10 Gew.-% beträgt.

Als hydrophobe Monomere können lineare oder verzweigte Alkylester der Acry 1- und Methacrylsäure (Alkyl(meth)acrylat) mit 1 bis 18 Kohlenstoffatomen in der Alkylkette, Vinylester mit 1 bis 12 Kohlenstoffatomen in der Säurekomponente, vinylaromatische Monomere wie Styrol, α-Methylstyrol oder Vinyltoluol sowie olefinisch ungesättigte Diene wie Butadien und Isopren eingesetzt werden. Bevorzugte hydrophobe Monomere sind lineare oder verzweigte Alkylester der Acryl- und Methacrylsäure mit 1 bis 8 Kohlenstoffatomen in der Alkylkette und/oder Styrol. Besonders bevorzugte hydrophobe Monomere sind Methylmethacrylat, Butylacrylat und Styrol.

Als hydrophile, wasserlösliche und salzbildende Monomere können olefinisch ungesättigte Sulfon- und/oder ein- oder mehr basige Carbonsäuren bzw. deren Metall- und Ammoniumsalze eingesetzt werden. Dazu eignen sich sulfonsäurehaltige Derivate der (Meth-)Acrylsäure wie Sulfoalkyl(meth)acrylate mit 1 bis 8 Kohlenstoffatomen in der Alkylkette, vinylaromatische Sulfonsäuren wie Styrolsulfonsäure, Vinylsulfonsäure und (Meth-)Allylsulfonsäure bzw. deren Metall- oder Ammoniumsalze. Desweiteren eignen sich ein- und mehrbasige, olefinisch ungesättigte Säuren wie Acryl- und Methacrylsäure, Maleinsäure, Fumarsäure oder Itakonsäure bzw. deren Metall- und Ammoniumsalze. Bevorzugte hydrophile Monomere sind Sulfoethyl- und Sulfopropyl(meth-)acrylat, Styrolsulfonsäure und (Meth-)Acrylsäure bzw. deren Metall- und Ammoniumsalze. Bevorzugte Metallsalze sind insbesondere die Natrium- und Kaliumsalze.

Die wasserlöslichen bzw. wasserdispergierbaren Harze enthalten 50 bis 70 Gew.-% hydrophobe Monomere und 30 bis 50 Gew.-% hydrophile Nonomere.

Als hydrophobes Monomer kann ein einzelnes der oben angeführten hydrophoben Monomere oder auch eine Mischung aus mehreren eingesetzt werden. Ebenso kann als hydrophiles Monomer eines oder ein Gemisch der angeführten hydrophilen Monomere eingesetzt werden.

Die Herstellung der wasserlöslichen bzw. wasserdispergierbaren Harze erfolgt mittels Verfahren der radikalischen Lösungs- und Dispersionspolymerisation, die dem Fachmann geläufig sind. Vorzugsweise wird in Wasser als Lösungs- bzw. Dispergiermittel polymerisiert. Die Monomere werden dabei vorzugsweise in einem semikontinuierlichen Zulaufverfahren zugegeben. Der radikalische Initiator, vorzugsweise ein wasserlösliches Peroxodisulfat wie Natrium- oder Ammoniumperoxodisulfat, kann vorgelegt oder semikontinuierlich zudosiert werden. Bei der Polymerisation werden vorzugsweise keine weiteren Lösungs-, Dispergier- und Emulgiermittel eingesetzt.

Die wasserlöslichen bzw. wasserdispergierbaren Harze haben ein mittleres Molekulargewicht zwischen 2 000 und 100 000 g/mol, vorzugsweise zwischen 5 000 und 20 000 g/mol. Die Einstellung des gewünschten Molekulargewichts bei der Polymerisation kann durch Zugabe eines Molekulargewichtsreglers geschehen.

Die wasserlöslichen bzw. wasserdispergierbaren Harze werden als Zusätze bei der Sprühtrocknung von den Acrylatdispersionen in Form wässriger Lösungen bzw. Dispersionen zugegeben. Die geeignete Menge an Harz beträgt 0,01 bis 30 Gew.-% Festharz bezogen auf 100 Gew.-% der Komponente I in der Dispersion. Besonders geeignet ist ein Zusatz von 5 bis 15 Gew.-%. Dabei kann ein einzelnes oder ein Gemisch von erfindungsgemäßen Harzen eingesetzt werden.

Geeignet sind insbesondere solche Harze oder Harzgemische, deren Glasübergangstemperatur weniger als 50 °C unterhalb der Eintrittstemperatur der fertigen Mischung im Sprühtrockner beträgt. Besonders bevorzugt sind solche Harze oder Harzgemische, deren Glasübergangstemperatur weniger als 30 °C unterhalb der Turmeingangstemperatur im Sprühtrockner liegt.

Die Mischung aus Acrylatdispersion und wasserlöslichem bzw. wasserdispergierbarem Harz wird durch Zugabe bzw. Entfernen von Wasser auf einen Feststoffgehalt von 20 bis 60 Gew.-% eingestellt. Dabei können nach Bedarf weitere Zusatzstoffe wie Entschäumer, Dispergiermittel, Verlaufshilfsmittel, Verdicker o.ä. zugegeben werden. Insbesondere können als Hilfsmittel weitere wasserlösliche Polymere wie Polyvinylalkohole, Polyethylenglykole, Cellulose- und Stärkederivate in einer Menge von 0 bis 50 Gew.-% bezogen auf die Feststoffmenge der Acrylatpolymerisats in der zu versprühenden Mischung zugegeben werden.

Die Herstellung der erfindungsgemäßen pulverförmigen, redispergierbaren Bindemittel erfolgt durch Verdüsung in einem Sprühtrockner. Die Eintrittstemperatur im Eingang des Turms beträgt 80 bis 150 °C, vorzugsweise 100 bis 130 °C. Die Austrittstemperatur liegt bei 40 bis 100 °C, vorzugsweise bei 50 bis 80 °C. Die zu versprühende Mischung wird über Einstoff- oder Mehrstoffdüsen oder Zerstäuberscheiben verdüst. Als Trocknungsgas kann sowohl Luft als auch Stickstoff bzw. Gemische aus beiden eingesetzt werden.

Zur Vermeidung des Verklebens des Pulvers bei der anschließenden Lagerung werden gleichzeitig mit der zu versprühenden wässrigen Mischung pulverförmige, mineralische Hilfsstoffe, im Folgenden Antiblockmittel genannt, über eine separate Vorrichtung als Festsubstanz mit in den Sprühtrockner verdüst. Der Gehalt an Antiblockmittel beträgt 0 bis 100 Gew.-% bezogen auf den Gehalt an Acrylatpolymerisat in der zu verdüsenden wäßrigen Mischung vorzugsweise zwischen 5 und 40 Gew.-%. Als Antiblockmittel eignen sich beispielsweise hydrophile und hydrophob modifizierte Kieselsäuren, Calciumcarbonat, Talkum, Kreide, Kaolin, Calciumsulfat und ähnliche Mineralien.

Die erfindungsgemäßen pulverförmigen, redispergierbaren Bindemittel habei einen mittleren Korndurchmesser von 20 bis 500 µm, vorzugsweise über 100 µm und sind äußerst staubarm. Die Pulver sind unter erhöhter Belastung bei Temperaturen bis 50 °C blockfest und lagerstabil, d.h. sie zerfallen spontan zu einem freifließenden Pulver. Durch mechanisches Einarbeiten in Wasser bzw. wässrige Mischungen redispergieren diese Pulver wieder und bilden eine Dispersion mit gleicher oder ähnlicher mittlerer Partikelgröße wie die zur Herstellung eingesetzte Acrylatdispersion.

Die erfindungsgemäßen pulverförmigen, redispergierbaren Bindemittel können durch inniges Vermischen mit pulverförmigen Mineralien, Farbpigmenten, Emulgier-, Dispergier-, Verdickungs- und weiteren Hilfsmitteln zu pulverförmigen Anstrichs- und Beschichtungsmassen sowie Kunststoffputzen formuliert werden. Durch mechanisches Anmischen mit Wasser können diese Trockenmischungen in gebrauchsfertige Anstrichs- und Beschichtungsmassen überführt werden. Ebenso eignen sich die Pulver zur Modifizierung von hydraulisch abbindenden Massen wie Beton, Mörtel, Baukleber, und Estrichen.

Insbesondere können die pulverförmigen, redispergierbaren Bindemittel zur Herstellung von Trockenmischungen für Anstrich- und Beschichtungsmassen ohne hydraulische Bindemittel sowie Einsatz der redispergierten, pulverförmigen Bindemittel in Anstrich-, Beschichtungs- und hydraulisch abbindenden Massen verwendet werden.

In gleicher Weise eignen sich auch die den erfindungsgemäßen Dispersionspulvern zugrunde liegenden wäßrigen Acrylatdispersionen und die durch Redispergierung der Pulver erhaltenen Dispersionen als Bindemittel für Dispersionsfarben und Beschichtungen von mineralischen und metallischen Untergründen sowie als Zusatz zu hydraulisch abbindenden Massen.

Mit dem Einsatz entsprechender pulverförmigen Trockenmischungen, die erst unmittelbar vor Gebrauch mit Wasser angerührt werden, können die mit dem Dispergiermedium Wasser verbundenen Lager- und Transportprobleme vermieden werden. Der Zusatz von Konservierungsmitteln ist nicht erforderlich. Zudem lassen sich die Gebinde für solche Trockenmischungen problemlos und schnell völlig rückstandsfrei entleeren, so daß diese einfach und umweltgerecht entsorgt werden können.

Die Erfindung wird durch die folgenden Beispiele noch weiter erläutert. Die angegebenen Viskositäten wurden mit einem Brookfield-Viskosimeter bestimmt. Der Koagulatanteil wurde über ein Sieb (Maschenweite 45 µm) abgetrennt; der angegebene Anteil bezieht sich auf den Feststoffgehalt der Dispersion.

### Beispiel 1: Herstellung einer Acrylatdispersion

In einem Polymerisationskessel mit Rührer, Innenthermometer und Dosiereinrichtungen werden die Komponenten der Mischung 1 zusammen mit 800 g Wasser vorgelegt.

| Mischung 1 | Monomermischung |
|---|---|
| 5 g tert.-Butylhydroperoxid | 400 g Styrol |
| 10 g Polyvinylalkohol | 600 g Butylacrylat |
| 0,5 g Triethanolamin | |
| 5 g Acrylamid | Aktivatorlösung |
| 1 g EDTA-Natriumsalz | 300 g Wasser |
| 0,5 g C15-Alkansulfonat | 4 g Natriumformaldehydsulfoxylat |
| 20 g Acrylsäure | |
| 11 g Natriumhydroxid | |

Nach Erhitzen auf 70 °C werden unter Rühren innerhalb 5 Stunden die Monomermischung und innerhalb 6 Stunden die Aktivatorlösung zugetropft und danach noch 2 Stunden weiter polymerisiert. Man erhält eine Dispersion mit einem Feststoffgehalt von 50,2 Gew.-%, einer Viskosität von 1300 mPa·s und einem Koagulatgehalt von 0,04 %. Die mittlere Partikelgröße beträgt 206 nm.

Die folgenden Beispiele 2 bis 4 erläutern die Herstellung der für die Herstellung der erfindungsgemäßen Dispersionspulver eingesetzten wasserlöslichen bzw. wasserdispergierbaren Harze.

### Beispiel 2

In einem Polymerisationskessel mit Rührer, Innenthermometer und Dosiereinrichtungen werden 160 g Wasser vorgelegt und auf 75 °C erhitzt. 48 g Natriumstyrolsulfonat in 400 g Wasser werden gleichzeitig mit 112 g Methylmethacrylat innerhalb von 2 Stunden kontinuierlich zudosiert. 1,6 g Natriumperoxodisulfat in 80 g Wasser werden innerhalb von 3 Stunden zudosiert. Danach wird noch 2 Stunden nachpolymerisiert. Man erhält eine klare Lösung mit einem Feststoffgehalt von 20,5 Gew.-%.

### Beispiel 3

Die Umsetzung erfolgt analog zu Beispiel 2, jedoch werden als Monomere 80 g Natriumstyrolsulfonat und 80 g Styrol eingesetzt. Man erhält eine Dispersion mit einem Feststoffgehalt von 19,9 Gew.-%.

### Beispiel 4

In einem Polymerisationskessel mit Rührer, Innenthermometer und Dosiereinrichtungen werden 300 g Methylethylketon vorgelegt und auf 75 °C erhitzt. 120 g Acrylsäure und 280 g Methylmethacrylat werden innerhalb von 2 Stunden kontinuierlich zudosiert. 12 g Azoisobutyronitril in 100 g Methylethylketon werden innerhalb von 3 Stunden zudosiert. Danach wird noch 4 Stunden nachpolymerisiert. Der Ansatz wird mit 67 g Natriumhydroxid in einem Überschuß von Wasser versetzt und das Methylethylketon vollständig abdestilliert. Man erhält eine klare Lösung mit einem Feststoffgehalt von 18,2 Gew.-%.

Das folgende Beispiel erläutert die Herstellung der erfindungsgemäßen pulverförmigen, redispergierbaren Dispersion durch Sprühtrocknung.

### Beispiel 5

4 000 kg Dispersion gemäß Beispiel 1 werden mit 1 103 g wäßriger Lösung eines Copolymers gemäß Beispiel 4 (entspricht 10 Gew.-% Copolymer auf 100 Gew.-% Latexfeststoff) homogen vermischt und mit Wasser auf einen Feststoffgehalt von 40 Gew.-% verdünnt.

Diese Mischung wird über eine Zweistoffdüse in einem handelsüblichen Versuchssprühtrockner der Fa. NIRO im Kreuzgegenstrom bei einer Eintrittstemperatur von 110 °C verdüst. Als Trocknungsgas dient Stickstoff mit einem Durchsatz von ca. 500 m³/Std. ein. Über eine zweite Düse wird im Gleichstrom ein Gemisch aus gleichen Gewichtsteilen Talkum und Dolomit eingedüst. Produkt- und Mineraldurchsatz werden so geregelt, daß im Turmausgang eine Temperatur von 70 °C und ein Mineralanteil von 20 Gew.-% auf 100 Gew.-% Feststoff in der wäßrigen Mischung erreicht wird. Das anfallende Produkt wird über eine Zyklon abgeschieden.

Das erhaltene Pulver ist freifließend und verklebt selbst bei erhöhter Belastung und Temperatur nicht. Mit Wasser läßt sich das Pulver wieder zu einer stabilen Dispersion anrühren.

## Patentansprüche

1. Pulverförmige, redispergierbare Bindemittel, erhalten durch Sprühtrocknung von wäßrigen, schutzkolloidstabilisierten Acrylatdispersionen, wobei
I. eine wäßrige, schutzkolloidstabilisierte Acrylatdispersion mit einem Feststoffgehalt von 10 bis 65 Gew.-% in Gegenwart von 0,01 bis 30 Gew.-% - bezogen auf 100 Gew.-% I -,
II. wasserlöslicher bzw. wasserdispergierbarer Harze mit mittleren Molekulargewichten zwischen 2.000 und 100.000 g/mol, bestehend aus
a) 50 bis 70 Gew.-% hydrophoben, im wesentlichen wasserunlöslichen Monomeren, wobei die Löslichkeit dieser Monomere in Wasser bei 25 °C weniger als 3 Gew.-% beträgt, und
b) 50 bis 30 Gew.-% hydrophilen, wasserlöslichen und salzbildenden Monomeren, wobei die Löslichkeit dieser Monomere bzw. deren Metall- oder Ammoniumsalze in Wasser bei 25 °C mindestens 10 Gew.-% beträgt,
in einem heißen Luftstrom zu einem freifließenden und staubarmen Pulver versprüht wird.

2. Pulverförmige, redispergierbare Bindemittel gemäß Anspruch 1, dadurch gekennzeichnet,
daß in den wasserlöslichen bzw. wasserdispergierbaren Harzen II
a) das hydrophobe, im wesentlichen wasserunlösliche Comonomere ein Alkyl(meth)acrylat mit 1 bis 8 Kohlenstoffatome in der Alkylkette und/oder Styrol oder ein Gemisch aus diesen ist, und
b) das wasserlösliche, hydrophile, salzbildende Monomere ein olefinisch ungesättigtes Sulfonsäurederivat bzw. dessen Metall- und Ammoniumsalz und/oder eine olefinisch ungesättigte, ein- oder mehrbasige Carbonsäure bzw. dessen Metall- und Ammoniumsalz oder ein Gemisch aus diesen ist.

3. Pulverförmige, redispergierbare Bindemittel gemäß den Ansprüchen 1 bis 2,
dadurch gekennzeichnet,
daß die Glasübergangstemperatur der wasserlöslichen bzw. wasserdispergierbaren Harze weniger als 50 °C unter der Eintrittstemperatur im Sprühtrockner beträgt.

4. Pulverförmige, redispergierbare Bindemittel gemäß den Ansprüchen 1 bis 3,
dadurch gekennzeichnet,
daß die Acrylatdispersion eine Mindestfilmbildungstemperatur von -30 °C bis 40 °C hat.

5. Verfahren zur Herstellung eines pulverförmigen, redispergierbaren Bindemittels durch Sprühtrocknung von wäßrigen, schutzkolloidstabilisierten Acrylatdispersionen,
dadurch gekennzeichnet, daß
I. eine wäßrige, schutzkolloidstabilisierte Acrylatdispersion mit einem Feststoffgehalt von 10 bis 65 Gew.-% in Gegenwart von 0,01 bis 30 Gew.-% - bezogen auf 100 Gew.-% I -,
II. wasserlöslicher bzw. wasserdispergierbarer Harze mit mittleren Molekulargewichten zwischen 2.000 und 100.000 g/mol, bestehend aus
a) 50 bis 70 Gew.-% hydrophoben, im wesentlichen wasserunlöslichen Monomeren, wobei die Löslichkeit dieser Monomere in Wasser bei 25 °C weniger als 3 Gew.-% beträgt, und
b) 50 bis 30 Gew.-% hydrophilen, wasserlöslichen und salzbildenden Monomeren, wobei die Löslichkeit dieser Monomere bzw. deren Metall- oder Ammoniumsalze in Wasser bei 25 °C mindestens 10 Gew.-% beträgt,
in einem heißen Luftstrom zu einem freifließenden und staubarmen Pulver versprüht wird, wobei die Sprühtrocknung bei einer Eintrittstemperatur von 80 bis 150 °C und einer Ausgangstemperatur von 40 bis 100 °C erfolgt.

6. Verwendung der pulverförmigen, redispergierbaren Bindemittel gemäß den Ansprüchen 1 bis 4, hergestellt nach Anspruch 5, zur Herstellung von Trockenmischungen für Anstrich- und Beschichtungsmassen ohne hydraulische Bindemittel sowie Einsatz der redispergierten, pulverförmigen Bindemittel in Anstrich-, Beschichtungs- und hydraulisch abbindenden Massen.

## Claims

1. A redispersible pulverulent binder obtained by spray-drying of aqueous acrylate dispersions stabilized by protective colloids, where
I. an aqueous acrylate dispersion stabilized by protective colloids and having a solids content of from 10 to 65% by weight is sprayed in the presence of from 0.01 to 30% by weight, based on 100% by weight of I, of
II. water-soluble or water-dispersible resins having average molecular weights of from 2,000 to 100,000 g/mol, composed of
a) from 50 to 70% by weight of hydrophobic monomers which are essentially insoluble in water, the solubility of these monomers in water at 25°C being less than 3% by weight, and
b) from 50 to 30% by weight of hydrophilic, water-soluble and salt-forming monomers, the solubility of these monomers or the metal salts or ammonium salts thereof in water at 25°C being at least 10% by weight,
in a stream of hot air to give a free-flowing powder which is low in dust.

2. A redispersible pulverulent binder according to claim 1, characterized in that in the water-soluble or water-dispersible resins II
a) the hydrophobic comonomer essentially insoluble in water is an alkyl (meth)acrylate having 1 to 8 carbon atoms in the alkyl chain and/or styrene, or a mixture of these, and
b) the water-soluble, hydrophilic, salt-forming monomer is an olefinically unsaturated sulphonic acid derivative or a metal salt or ammonium salt thereof and/or an olefinically unsaturated mono- or polybasic carboxylic acid or a metal salt or ammonium salt thereof, or a mixture of these.

3. A redispersible pulverulent binder according to either of claims 1 and 2, characterized in that the glass transition temperature of the water-soluble or water-dispersible resins is less than 50°C below the temperature of entry into the spray dryer.

4. A redispersible pulverulent binder according to any of claims 1 to 3, characterized in that the acrylate dispersion has a minimum film-forming temperature of from -30°C to 40°C.

5. A process for the preparation of a redispersible pulverulent binder by spray-drying aqueous acrylate dispersions stabilized by protective colloids, characterized in that
I. an aqueous acrylate dispersion stabilized by protective colloids and having a solids content of 10 to 65% by weight is sprayed in the presence of from 0.01 to 30% by weight, based on 100% by weight of I, of
II. water-soluble or water-dispersible resins having average molecular weights of from 2,000 to 100,000 g/mol, composed of
a) from 50 to 70% by weight of hydrophobic monomers which are essentially insoluble in water, the solubility of these monomers in water at 25°C being less than 3% by weight, and
b) from 50 to 30% by weight of hydrophilic, water-soluble and salt-forming monomers, the solubility of these monomers or the metal salts or ammonium salts thereof in water at 25°C being at least 10% by weight,
in a stream of hot air to give a free-flowing powder which is low in dust, the spray-drying being carried out at an entry temperature of from 80 to 150°C and an exit temperature of from 40 to 100°C.

6. Use of a redispersible pulverulent binder according to any of claims 1 to 4, prepared according to claim 5, for the production of dry mixtures for paints and coating compositions without hydraulic binders, and use of the redispersed pulverulent binder in paints, coating compositions and hydraulically setting compositions.

## Revendications

1. Liants pulvérulents redispersables obtenus par atomisation de dispersions d'acrylate aqueuses stabilisées par des colloïdes protecteurs, dans lesquels on pulvérise dans un courant d'air chaud,
I. Une dispersion d'acrylate aqueuse, stabilisée par un colloïde protecteur, ayant une teneur en solide de 10 à 65 % en poids en présence de 0,01 à 30 % en poids - par rapport à 100 % en poids de I - ,
II. Une résine soluble dans l'eau ou dispersable dans l'eau ayant un poids moléculaire moyen compris entre 2000 et 100 000 g/mole, constituée de
a) 50 à 70 % en poids de monomères hydrophobes essentiellement insolubles dans l'eau, la solubilité de ces monomères dans l'eau à 25°C étant inférieure à 3 % en poids, et
b) 50 à 30 % en poids de monomères hydrophiles, solubles dans l'eau et salifiables, la solubilité de ces monomères ou de leurs sels de métaux ou d'ammonium dans l'eau à 25°C s'élevant à au moins 10 % en poids,
sont pulvérisés dans un courant d'air chaud pour donner une poudre à écoulement libre et pauvre en poussières.

2. Liants pulvérulents redispersables selon la revendication 1,
caractérisés en ce que
dans les résines II solubles dans l'eau ou selon les cas dispersables dans l'eau.
a) le comonomère hydrophobe, essentiellement insoluble dans l'eau, est un (méth)acrylate d'alkyle, ayant de 1 à 8 atomes de carbone dans la chaîne alkyle et/ou un styrène ou un mélange de ces corps,
et
b) le monomère hydrophile salifiable soluble dans l'eau est un dérivé d'acide sulfonique oléfiniquement insaturé ou un de ses sels métalliques et d'ammonium et/ou un acide carboxylique mono- ou polybasique oléfiniquement insaturé ou selon les cas un de ses sel métalliques ou d'ammonium, ou un mélange de ces corps.

3. Liants pulvérulents redispersables selon les revendications 1 à 2,
caractérisés en ce que
la température de transition vitreuse des résines solubles dans l'eau ou selon les cas dispersables dans l'eau est inférieure à 50°C à la température de pénétration dans l'atomiseur sécheur.

4. Liants pulvérulents redispersables selon les revendications 1 à 3,
caractérisés en ce que
la dispersion d'acrylate a une température minimum de formation de pellicule de -30°C à 40°C.

5. Procédé de fabrication d'un liant pulvérulent redispersable par atomisation de dispersions d'acrylate aqueuses et stabilisées par un colloïde protecteur,
caractérisé en ce qu'
on pulvérise dans un courant d'air chaud
I. Une dispersion d'acrylate aqueuse, stabilisée par un colloïde protecteur, ayant une teneur en solide de 10 à 65 % en poids en présence de 0,01 à 30 % en poids - par rapport à 100 % en poids - de I,
II. Des résines solubles dans l'eau ou selon les cas dispersables dans l'eau ayant un poids moléculaire moyen compris entre 2000 et 100 000 g/mole, constituées de
a) 50 à 70 % en poids de monomères hydrophobes essentiellement insolubles dans l'eau, la solubilité de ces monomères dans l'eau à 25°C étant inférieure à 3 % en poids, et
b) 50 à 30 % en poids de monomères hydrophiles, solubles dans l'eau et salifiables, la solubilité de ces monomères ou de leurs sels de métaux ou d'ammonium dans l'eau à 25°C s'élevant à au moins 10 % en poids,
sont pullvérisés dans un courant d'air chaud pour donner une poudre à écoulement libre et pauvre en poussières, la pulvérisation s'effectuant à une température d'entrée de 80 à 150°C et à une température de sortie de 40 à 100°C.

6. Utilisation des liants pulvérulents redispersables selon les revendications 1 à 4,
fabriqués selon la revendication 5, pour fabriquer des mélanges secs pour masses de peinture et d'enduction sans liants hydrauliques, ainsi qu'utilisation des liants pulvérulents redispersés dans des masses de peinture, d'enduction et polymérisation hydraulique.
